# EUROPÄISCHE PATENTSCHRIFT

(11) **EP 2 351 145 B1**
(45) Veröffentlichungstag und Bekanntmachung des Hinweises auf die Patenterteilung: **13.12.2017**
(21) Anmeldenummer: 09784027.6
(22) Anmeldetag: 15.10.2009
(51) Int. Cl.: H01Q 1/04, H01Q 1/34, G01S 7/521, H04R 1/44, B63G 8/39, H04R 1/34

(54) **UNTERWASSERANTENNE**
SUBMARINE ANTENNA
ANTENNE SOUS-MARINE

(30) Priorität: 20.10.2008 DE 102008052353
(43) Veröffentlichungstag der Anmeldung: 03.08.2011
(73) Patentinhaber: ATLAS ELEKTRONIK GmbH, 28309 Bremen (DE)
(72) Erfinder: HOFFMANN, Christoph, 27777 Ganderkesee (DE); BARG, Ulrich, 28870 Ottersberg (DE); FOGGE, Dirk-Oliver, 27239 Twistringen (DE); LINDNER, Jürgen, 27777 Ganderkesee (DE); RIGGERS, Rainer, 27729 Hambergen-Heißenbüttel (DE)
(86) Internationale Anmeldenummer: PCT/EP2009/063485
(87) Internationale Veröffentlichungsnummer: WO 2010/046301

(56) Entgegenhaltungen:
- EP-A1- 0 297 008
- EP-A1- 1 249 827
- DE-A1-102004 037 987
- JP-A- 8 324 489

## Beschreibung

Die Erfindung betrifft eine Unterwasserantenne zum Anbau an den Bootskörper eines Unterseeboots nach Oberbegriff des Anspruchs 1.

Eine als Flankarray bezeichnete, bekannte, lineare Unterwasserantenne (DE 38 34 669 A1) weist einen im Abstand vom Bootskörper eines Unterseeboots, im folgenden kurz U-Boot genannt, montierte Wandleranordnung mit einer Vielzahl von in Anbaulage der Unterwasserantenne längs des Bootskörpers horizontal hintereinander gereihten, voneinander beabstandeten Hydrophonen und zur Schirmwirkung gegenüber vom Bootskörper abgestellten Schall eine in Schalleinfallsrichtung hinter den Hydrophonen angeordnete Dämmplatte auf, die nach dem Feder-Masse-Prinzip ausgelegt ist und im unteren Frequenzbereich als schallweicher Reflektor wirkt. Die Hydrophone sind an dem Reflektor über eine Schellenkonstruktion gehalten, und der Reflektor ist mit federnden Elementen über eine biegewellenenabsorbierende Dämpfungsschicht an die Körperwand des Bootskörpers montiert. Die Dämpfungsschicht ist so ausgeführt, dass sie noch einen zusätzlichen Auftriebseffekt erzeugt. Die federnden Elemente sind hinsichtlich auftretender Stoß-, Schwing- und Schockbelastung dimensioniert.

Die Richtcharakteristik einer solchen linearen Unterwasserantenne hat einen von der Antennenlänge abhängigen kleinen Öffnungswinkel in Horizontalrichtung und einen von der Eigencharakteristik der Hydrophone bestimmten extrem großen Öffnungswinkel in Vertikalrichtung.

Eine bekannte, flächig ausgebildete Unterwasserantenne, auch Flächenantenne genannt (DE 10 2004 037 987 A1), ist aus einer Mehrzahl von panelartigen Antennensegmenten zusammengesetzt. Jedes Antennenelement weist einen akustisch transparenten, plattenartigen Kunststoffkörper auf, in dem in Reihen und Spalten angeordnete Hydrophone und eine als Reflektor dienende biegesteife Platte, die in Schalleinfallsrichtung hinter den Hydrophonen angeordnet ist, eingebettet sind. Eine solche für Empfangsantennen im mittleren bis höheren Frequenzbereich ausgelegt Flächenantenne hat ein gutes Vor-Rückwärtsverhältnis. Durch die Möglichkeit der addierten Zusammenfassung der Ausgangssignale der in Anbaulage der Flächenantenne in den Spalten vertikal untereinanderliegenden Hydrophone besitzt diese Flächenantenne auch eine gute Bündelung der Richtcharakteristik im vertikalen Empfangsbereich und damit ein verbessertes Nutz-Störverhältnis, sodass der Einsatz einer solchen Flächenantenne als Seitenantenne wegen ihrer gegenüber einem linearen Flankarray deutlich besseren Detektion- und Empfangseigenschaften attraktiv ist. Die Erzielung des guten Vor-Rückwärtsverhältnisses auch für Empfangsfrequenzen im Tieffrequenzbereich erzwingt eine große Masse des Reflektors, was bei den relativ langen Seitenantennen zu einem Gewicht führt, was bezüglich des U-Bootes Konstruktionsprobleme aufwirft.

EP 1 249 827 A1 offenbart eine Schallsäule für eine zylindrische Unterwasserantenne eines passiven Sonars mit einer äußeren Schutzschicht, einer Zwischenschicht, welche mit einer Gruppe von Hydrophonen versehen ist, einer harten Reflektorschicht und einer absorbierenden Schicht aus Polyurethanschaum. Die Hydrophone sind dabei in Schalleinfallsrichtung dem Reflektor vorgeordnet. Die Reflektorschicht und die mit den Hydrophonen versehene Zwischensicht sind einem ersten Teil der bekannten Schallsäule zugeordnet, welche mittels stangenförmiger Befestigungsmittel fest an der Struktur der Antenne befestigt sind. Ein zweiter Teil der bekannten Schallsäule umfasst eine absorbierende Schicht, welche Löcher zur Durchführung der stangenförmigen Befestigungsmittel des ersten Teils aufweist. Zum Zusammensetzen der beiden Teile der bekannten Schallsäule werden die Stangen des ersten Teils in die Löcher der absorbierenden Schicht eingeführt, und die freien Enden dieser Stangen an einem die Antenne tragenden Schaft befestigt, wodurch die beiden Teile zusammengehalten sind und die fragile absorbierende Schicht nahe der Hülle gehalten ist.

Der Erfindung liegt die Aufgabe zugrunde, eine als Seitenantenne für ein U-Boot verwendbare, flächige Unterwasserantenne zu konzipieren, die ein gutes Nutz-Störverhältnis auch in vertikaler Richtung aufweist und den vom U-Boot vorgegebenen Rahmenbedingungen bezüglich Gewicht und Montagefreundlichkeit genügt.

Die Aufgabe ist erfindungsgemäß durch die Merkmale im Anspruch 1 gelöst.

Die erfindungsgemäße Unterwasserantenne hat den Vorteil, dass durch die Festlegung des für eine gute Performance der Antenne notwendigen, massebehafteten Reflektors an einem mit dem U-Boot verbundenen Auftriebskörper mit Hartschaumkern, Vergußmasse und eingebetteten hochfesten Tragteilen einerseits durch Hartschaum und Vergußmasse ein das Gewicht des Reflektors zumindest teilweise kompensierender Auftrieb erzeugt wird und andererseits durch die in die Vergußmasse eingebetteten, hochfesten Tragteile das Problem der von dem Hartschaum aufnehmbaren nur niedrigen Flächenlasten gelöst ist. Durch eine einerseits an die Außenwand des U-Boots und andererseits an die vertikale Ausrichtung des Reflektors angepasste Formgebung des Auftriebskörpers lässt sich dieser vorteilhaft als Verbindung zwischen U-Boot und Reflektor einsetzen und zur akustischen Entkopplung von Bootskörper und Unterwasserantenne nutzen.

Zweckmäßige Ausführungsformen der erfindungsgemäßen Unterwasserantenne mit vorteilhaften Weiterbildungen und Ausgestaltungen der Erfindung ergeben sich aus den weiteren Ansprüchen.

Gemäß einer vorteilhaften Ausführungsform der Erfindung ist der Hartschaumkern aus Hartschaumplatten zusammengesetzt, die in Abstand voneinander parallel zueinander ausgerichtet sind, und die zwischen den Hartschaumplatten vorhandenen Spalte mit der Vergußmasse ausgefüllt, die vorzugsweise aus einem

Verbundwerkstoff aus Epoxidharz und darin eingelagerten kleinen Hohlkörpern besteht. Durch diese Ausbildung des Hartschaumkerns wird einerseits eine hohe Druckfestigkeit des Auftriebskörpers und andererseits eine ausreichend hohe Auftriebskraft zur Kompensation des Gewichts des massebehafteten Reflektors erzielt. Die mit Vergußmasse verfüllten Spalte weisen eine Spaltbreite auf, die deutlich kleiner ist als die Dicke der Hartschaumplatten, z.B. ca. 1/3 der Dicke der Hartschaumplatten beträgt.

Gemäß einer vorteilhaften Ausführungsform der Erfindung sind die hochfesten Tragteile langgestreckte, steife Platten und steife Hülsen oder Buchsen zur Einführung von Befestigungsmitteln. Diese Tragteile sind vorzugsweise aus glasfaserverstärktem Kunststoff (GFK)hergestellt, um bei geringem Gewicht eine hohe Trägfähigkeit zu erreichen. Die große Oberfläche der Tragteile wirkt sich vorteilhaft auf die Einleitung von Kräften in den Hartschaumkern aus.

Die Erfindung ist anhand eines in der Zeichnung dargestellten Ausführungsbeispiels im folgenden näher beschrieben. Es zeigen:
- Fig. 1: ausschnittweise eine perspektivische Ansicht einer als Seitenantenne an einen Bootskörper eines U-Boots angesetzten, elektroakustischen Unterwasserantenne mit Wandleranordnung, Reflektor und Auftriebskörper,
- Fig. 2: eine perspektivische Ansicht des Auftriebskörpers in Fig. 1,
- Fig. 3: eine Ansicht eines Hartschaumkerns des Auftriebskörpers ohne Vergußmasse in Richtung Pfeil III in Fig. 2.

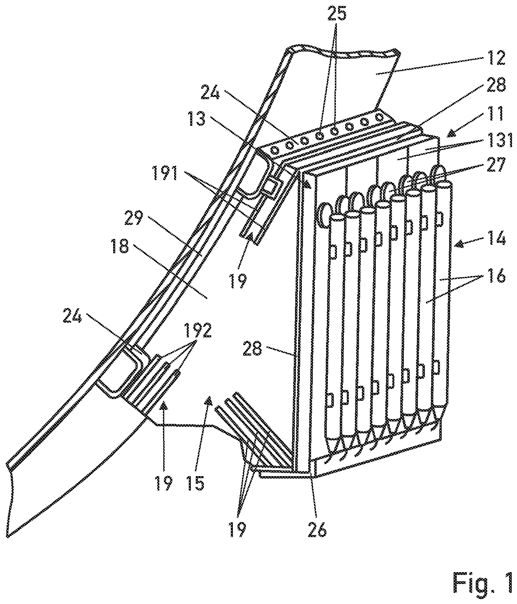

Von der in Fig. 1 ausschnittweise zu sehenden, als flächige Seitenantenne eingesetzten Unterwasserantenne ist ausschließlich ein Antennensegment 11 perspektivisch dargestellt. Mehrere solcher Antennensegmente 11 sind längs eines Bootskörpers eines U-Boots aneinandergesetzt und an der Körperwand 12 des Bootskörpers befestigt. Alle Antennensegmente 11 sind identisch aufgebaut und ergeben in ihrer Gesamtheit die Unterwasserantenne mit flächiger Wandleranordnung, Reflektor und Auftriebskörper. Im folgenden wird daher lediglich der Aufbau des in Fig. 1 dargestellten Antennensegments 11 beschrieben, das in seiner Vervielfältigung die über einen Großteil der Bootslänge sich erstreckende Seitenantenne ergibt. Beispielsweise ist die Seitenantenne aus bis zu vierundzwanzig solcher Antennensegmente 11 zusammengesetzt.

Jedes Antennensegment 11 weist einen plattenförmigen, akustischen Reflektor 13, eine dem Reflektor 13 in Schalleinfallsrichtung vorgesetzte Wandleranordnung 14 aus einer Vielzahl von in Anbaulage der Unterwasserantenne horizontal und vertikal jeweils voneinander beabstandet aufgereihten, elektroakustischen Wandlern, sowie einen in Schalleinfallsrichtung hinter dem Reflektor 13 liegenden Auftriebskörper 15 auf. Im dargestellten Ausführungsbeispiel besteht die Wandleranordnung 14 aus mehreren vertikal ausgerichteten sog. Staves 16, die in Horizontalrichtung voneinander beabstandet angeordnet sind. In jedem Stave 16 sind mehrere elektroakustische Wandler voneinander beabstandet vertikal untereinander angeordnet. Die Anzahl der vertikal untereinander angeordneten elektroakustischen Wandler bestimmt den vertikalen Öffnungswinkel der Richtcharakteristik der Unterwasserantenne. In dem in Fig. 1 dargestellten Ausführungsbeispiel sind pro Antennensegment acht Staves 16 vorhanden. Der Reflektor 13 ist vorzugsweise aus mehreren, hier vier, einzelnen längsgestreckten Reflektorplatten 131, die in Horizontalrichtung aneinander gesetzt sind, zusammengesetzt. Jeder Reflektorplatte 131 sind zwei Staves 16 der Wandleranordnung zugeordnet.

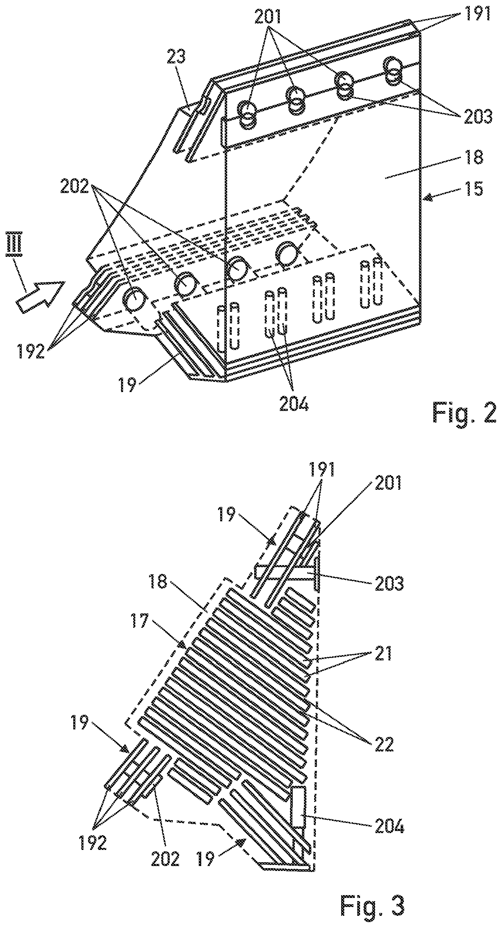

Der an der von der Wandleranordnung 14 abgekehrten Rückseite des Reflektors 13 angeordnete Auftriebskörper 15 liegt mit seiner von dem Reflektor 13 abgekehrten Rückseite unter Zwischenlage einer elastischen Matte oder Folie 29 aus Gummi oder Polyurethan an der Körperwand 12 des Bootskörpers an und ist auf seiner Vorderfläche mit dem Reflektor 13 belegt. Die Form der Rückseite ist dabei dem gewölbten Verlauf der Körperwand 12 angepasst. Der in Fig. 2 perspektivisch zu sehende Auftriebskörper 15 weist einen in Fig. 3 abgebildeten Hartschaumkern 17, der von einer Vergußmasse 18 umschlossen ist (in Fig. 3 strichliniert angedeutet), und in die Vergußmasse 18 eingebettete, kraftaufnehmende, hochfeste Tragteile auf. Die aus glasfaserverstärktem Kunststoff hergestellten, hochfesten Tragteile umfassen langgestreckte steife Platten 19 (Fig. 1) und steife Buchsen oder Hülsen zur Einführung von Befestigungsmitteln. Die Platten 19 erstrecken sich über die gesamte, in Anbaulage des Auftriebskörpers 15 horizontale Länge des Auftriebskörpers 15 und sind mindestens paarweise parallel zueinander, voneinander beabstandet ausgerichtet. Mindestens ein Teil der Hülsen - in Fig. 2 und 3 die Hülsen 201, 202, 204 - durchstoßen dabei formschlüssig die eine oder andere Plattenpaarung. Die Hülsen 203 können alternativ auch nicht durch die Plattenpaarung 191 hindurchgeführt werden. Hierzu wird entweder die Länge der Hülsen 203 oder die Breite der Plattenpaarung 119 verkürzt.

Der Hartschaumkern 17 ist aus einer Mehrzahl von Hartschaumplatten 21 zusammengesetzt, die in ihrer Gesamtheit auf die endgültige Form des Auftriebskörpers 15 zugeschnitten und voneinander beabstandet, parallel zueinander ausgerichtet sind. Die durch den Parallelabstand der Hartschaumplatten 21 zwischen diesen verbleibenden Spalte 22 sind mit der gleichen Vergußmasse ausgefüllt. Das Ausgießen der Spalte 22 und das Umgießen des Hartschaumkerns 17 mit Einbetten der hochfesten Tragteile, wie Platten 19 und Hülsen 20, erfolgt in einer geschlossenen Form in einem Arbeitsgang. Als Vergußmasse wird vorzugsweise ein Verbundwerkstoff aus einem Epoxidharz mit eingelagerten, druckfesten Hohlkörpern, z.B. Glashohlkörper, verwendet. In einer alternativen Ausführungsform des Hartschaumkerns 17 erstrecken sich die Hartschaumplatten 21 nicht, wie in Fig. 3 dargestellt, senkrecht zur Zeichenebene, sondern liegen parallel zur Zeichenebene, so dass jede Hartschaumplatte 21 die in Vertikalrichtung sich erstreckende Kontur des Hartschaumkerns 17 aufweist.

Der Auftriebskörper 15 ist an seiner der Körperwand 12 des Bootskörpers zugekehrten Rückseite mit zwei Aussparungen 23 versehen (Fig. 2). Bei der Montage wird der Auftriebskörper 15 so an den Bootskörper angesetzt, dass die Aussparungen 23 auf zwei an der Körperwand 12 befestigten Tragschienen 24 (Fig. 1) aufliegen. Der Auftriebskörper 15 wird mittels Schraubverbindung auf den Tragschienen 24 befestigt, wobei zwischen den Tragschienen 24 die elastische Folie 29 auf die Körperwand 12 aufgebracht ist, auf der die Rückseite des Auftriebskörpers 15 aufliegt. Zur Herstellung der Schraubverbindung werden in die Hülsen 201 und 202, die einerseits das Plattendoppel 191 und andererseits das Plattentrippel 192 formschlüssig durchstoßen und mit Gewindelöchern in den Tragschienen 24 kongruent sind, Befestigungsschrauben 25 eingeführt und in den Gewindelöchern der Tragschiene 24 verschraubt. Der Reflektor 13 wird an der Oberkante mittels Befestigungsschrauben 27 (Fig. 1), die in die mit einem Innengewinde versehenen Hülsen 203 eingeführt sind, an dem Auftriebskörper 15 verankert, und zwar so, dass zwischen Auftriebskörper 15 und Reflektor 13 ein flächenhafter Spalt 23 verbleibt. Die Hülsen 203 werden entweder beim Vergießen des Hartschaumkerns 17 mit eingegossen oder in nachträglich in den Auftriebskörper 15 eingebrachte Bohrungen eingeklebt. Längs der Unterkante wird der Reflektor 13 mittels einer Winkelschiene 26 (Fig. 1) festgelegt, die ihrerseits mittels in die Hülsen 204 (Fig. 2 und 3) eingeführter Befestigungsmittel am Auftriebskörper 15 verankert ist.

## Patentansprüche

1. Unterwasserantenne zum Anbau an den Bootskörper eines Unterseeboots, mit einem plattenförmigen, akustischen Reflektor (13) und einer dem Reflektor (13) in Schalleinfallsrichtung vorgeordneten, flächigen Wandleranordnung (14) aus einer Vielzahl von in Anbaulage des Reflektors (13) vertikal und horizontal voneinander beabstandet aufgereihten, elektroakustischen Wandlern, wobei der Reflektor (13) einem Auftriebskörper (15) in Schalleinfallsrichtung vorgeordnet ist, **dadurch gekennzeichnet, dass** der Auftriebskörper (15) zur unmittelbaren Festlegung am Bootskörper ausgebildet ist und einen Hartschaumkern (17), eine den Hartschaumkern (17) umschließende Vergußmasse und in die Vergußmasse (18) eingebettete, kraftaufnehmende, hochfeste Tragteile aufweist.

2. Unterwasserantenne nach Anspruch 1, **dadurch gekennzeichnet, dass** der Hartschaumkern (17) aus Hartschaumplatten (21) zusammengesetzt ist, die im Abstand voneinander parallel zueinander ausgerichtet sind, und dass die zwischen den Hartschaumplatten (21) vorhandenen Spalte (22) mit der Vergussmasse (18) ausgefüllt sind.

3. Unterwasserantenne nach Anspruch 2, **dadurch gekennzeichnet, dass** die Spaltbreite der mit Vergußmasse (18) ausgefüllten Spalte (22) einen Bruchteil der Dicke der Hartschaumplatten (21) beträgt.

4. Unterwasserantenne nach Anspruch 2 oder 3, **dadurch gekennzeichnet, dass** die die Spalten (22) ausfüllende und die den Hartschaumkern (17) umschließende Vergußmasse (18) einstückig hergestellt sind.

5. Unterwasserantenne nach einem der Ansprüche 1 bis 4, **dadurch gekennzeichnet, dass** die Vergußmasse (18) ein Verbundwerkstoff aus einem Epoxidharz und eingelagerten, druckfesten Hohlkörpern, vorzugsweise Glashohlkörpern, ist.

6. Unterwasserantenne nach einem der Ansprüche 1 bis 5, **dadurch gekennzeichnet, dass** die hochfesten Tragteile langgestreckte, steife Platten (19) und steife Hülsen (201, 202, 203, 204) zur Einführung von Befestigungsmitteln umfassen.

7. Unterwasserantenne nach Anspruch 6, **dadurch gekennzeichnet, dass** die Platten (19) sich über die gesamte, in Anbaulage horizontale Länge des Auftriebskörpers (15) erstrecken und mindestens paarweise parallel zueinander, voneinander beabstandet ausgerichtet sind.

8. Unterwasserantenne nach Anspruch 7, **dadurch gekennzeichnet, dass** mindestens ein Teil der Hülsen (201, 202) formschlüssig durch mindestens eine Plattenpaarung (191, 192) hindurchtreten.

9. Unterwasserantenne nach einem der Ansprüche 1 bis 8, **dadurch gekennzeichnet, dass** die hochfesten Tragteile aus glasfaserverstärktem Kunststoff bestehen.

10. Unterwasserantenne nach einem der Ansprüche 6 bis 8, **dadurch gekennzeichnet, dass** zumindest ein Teil der steifen Hülsen (203) ein Innengewinde aufweisen, in die den Reflektor (13) am Auftriebskörper (15) festlegende Befestigungsschrauben (27) eingedreht sind.

11. Unterwasserantenne nach Anspruch 10, **dadurch gekennzeichnet, dass** der Reflektor (13) mittels der Befestigungsschrauben (27) so am Auftriebskörper (15) festgelegt ist, dass zwischen der dem Auftriebskörper (15) zugekehrten Rückseite des Reflektors (13) und der dem Reflektor (13) zugekehrten Vorderseite des Auftriebskörpers (15) ein Flächenspalt (28) verbleibt.

12. Unterwasserantenne nach einem der Ansprüche 1 - 11, **dadurch gekennzeichnet, dass** der Auftriebskörper (15) über eine Folie (28) aus elastischem Material, vorzugsweise Polyurethan oder Gummi, an der Körperwand (12) des Bootskörpers anliegt.

13. Unterwasserantenne nach einem der Ansprüche 1 bis 12, **dadurch gekennzeichnet, dass** der Reflektor (13) mit vorgeordneter Wandleranordnung (14) und nachgeordnetem Auftriebskörper (15) in vertikal getrennte, horizontal aneinandergesetzte Antennensegmente (11) unterteilt ist, die einzeln an den Bootskörper anbaubar sind.

## Claims

1. Underwater antenna for attachment to the boat body of a submarine, with a plate-shaped, acoustic reflector (13) and a planar converter arrangement (14) arranged in front of the reflector (13) in the direction of incident sound and consisting of a plurality of electroacoustic converters arranged in series at a vertical and horizontal distance from each other in the attached position of the reflector (13), wherein the reflector (13) is arranged in front of a buoyancy body (15) in the direction of incident sound, **characterized by that** the buoyancy body (15) is constructed for being directly fixed on the boat body and comprises a hard foam core (17), a sealing mass surrounding the hard foam core (17) and high-strength carrier parts which receive force and are embedded in the sealing mass (18).

2. Underwater antenna according to Claim 1, **characterized by that** the hard foam core (17) is composed of hard foam plates (21) which are aligned at a distance from each other and parallel to each other, and that the slot (22) present between the hard foam plates (21) is filled with the sealing mass (18).

3. Underwater antenna according to Claim 2, **characterized by that** the slot width of the slot (22) filled with sealing mass (18) is a fraction of the thickness of the hard foam plates (21).

4. Underwater antenna according to Claim 2 or 3, **characterized by that** the sealing mass (18) filling the slots (22) and surrounding the hard foam core (17) is manufactured in one piece.

5. Underwater antenna according to one of Claims 1 to 4, **characterized by that** the sealing mass (18) is a composite material consisting of an epoxide resin and embedded, pressure-resistant hollow bodies, preferably glass hollow bodies.

6. Underwater antenna according to one of Claims 1 to 5, **characterized by that** the high-strength carrier parts comprise longitudinally extended, stiff plates (19) and stiff casings (201, 202, 203, 204) for introducing fastening means.

7. Underwater antenna according to Claim 6, **characterized by that** the plates (19) extend over the entire horizontal length of the buoyancy body (15) in the attached position and are aligned at least in pairs parallel to each other and at a distance from each other.

8. Underwater antenna according to Claim 7, **characterized by that** at least a part of the casings (201, 202) extend positively through at least one plate pair (191, 192).

9. Underwater antenna according to one of Claims 1 to 8, **characterized by that** the high-strength carrier parts consist of plastic reinforced with glass fibres.

10. Underwater antenna according to one of Claims 6 to 8, **characterized by that** at least a part of the rigid casings (203) comprises an inner threading into which fastening screws (27) fixing the reflector (13) to the buoyancy body (15) are screwed in.

11. Underwater antenna according to Claim 10, **characterized by that** the reflector (13) is fastened by the fastening screws (27) in such a manner on the buoyancy body (15) that a planar slot (28) remains between the back side of the reflector (13) facing the buoyancy body (15) and the front side of the buoyancy body (15) facing the reflector (13).

12. Underwater antenna according to one of Claims 1 to 11, **characterized by that** the buoyancy body (15) rests on the body wall (12) of the boat body over a sheet (28) of elastic material, preferably polyurethane or rubber.

13. Underwater antenna according to one of Claims 1 to 12, **characterized by that** the reflector (13) is subdivided with the converter arrangement (14) arranged in front and the buoyancy body (15) arranged in back into vertically separated antenna segments (11) horizontally placed on each other which can be individually attached to the boat body.

## Revendications

1. Antenne sous-marine, pour montage sur la coque d'un sous-marin, comprenant un réflecteur acoustique plat (13) et un arrangement de transducteurs (14), bidimensionnel, disposé en amont du réflecteur (13) dans la direction d'incidence du son, constitué d'un grand nombre de transducteurs électroacoustiques, et qui, dans la position de montage du réflecteur (13), sont alignés, à distance verticale et horizontale les uns des autres, le réflecteur (13) étant disposé en amont d'un flotteur (15) dans la direction d'incidence du son, **caractérisée en ce que** le flotteur (15) est conçu pour fixation directe à la coque, et présente une masse de scellement, entourant le coeur en mousse rigide (17), et des pièces supports à grande résistance, absorbant les forces, incorporées dans la masse de scellement (18).

2. Antenne sous-marine selon la revendication 1, **caractérisée en ce que** le coeur en mousse rigide (17) est constitué de plaques (21) en mousse rigide, qui sont orientées à distance les unes des autres et parallèlement les unes aux autres, et que la fente (22), présente entre les plaques (21) en mousse rigide, est remplie de la masse de scellement (18).

3. Antenne sous-marine selon la revendication 2, **caractérisée en ce que** la largeur de la fente (22) remplie de la masse de remplissage (18) représente une fraction de l'épaisseur des plaques (21) en mousse rigide.

4. Antenne sous-marine selon la revendication 2 ou 3, **caractérisée en ce que** la masse de scellement (18), qui remplit les fentes (22) et qui entoure le coeur (17) en mousse rigide, est fabriquée en une pièce.

5. Antenne sous-marine selon l'une des revendications 1 à 4, **caractérisée en ce que** la masse de scellement (18) est un matériau composite constitué d'une résine époxyde et de corps creux, de préférence des corps creux en verre, résistant à la compression, et encastrés.

6. Antenne sous-marine selon l'une des revendications 1 à 5, **caractérisée en ce que** les pièces supports à grande résistance comprennent des plaques rigides allongées (19) et des douilles rigides (201, 202, 203, 204), pour insertion de moyens de fixation.

7. Antenne sous-marine selon la revendication 6, **caractérisée en ce que** les plaques (19) s'étendent sur la totalité de la longueur, horizontale en position de montage, du flotteur (15), et sont orientées au moins par paires parallèlement l'une à l'autre, de préférence à distance l'une de l'autre.

8. Antenne sous-marine selon la revendication 7, **caractérisée en ce qu'**au moins une partie des douilles (201, 202) traversent au moins une paire de plaques (191, 192) par une liaison avec correspondance de forme.

9. Antenne sous-marine selon l'une des revendications 1 à 9, **caractérisée en ce que** les pièces supports à grande résistance sont constituées d'un matériau plastique renforcé par des fibres de verre.

10. Antenne sous-marine selon l'une des revendications 6 à 8, **caractérisée en ce qu'au** moins une partie des douilles rigides (203) comprennent un taraudage, dans lequel sont vissées des vis de fixation (27), qui fixent le réflecteur (13) au flotteur (15).

11. Antenne sous-marine selon la revendication 10, **caractérisée en ce que** le réflecteur (13) est fixé au flotteur (15) à l'aide des vis de fixation (27) de telle sorte qu'il reste une fente plane (28)entre la face arrière, dirigée vers le flotteur (15), du réflecteur (13), et la face avant, dirigée vers le réflecteur (13), du flotteur (15).

12. Antenne sous-marine selon l'une des revendications 1 à 11, **caractérisée en ce que** le flotteur (15) s'appuie, par l'intermédiaire d'une feuille (28) en un matériau élastique, de préférence le polyuréthanne ou le caoutchouc, contre la paroi (12) de la coque.

13. Antenne sous-marine selon l'une des revendications 1 à 12, **caractérisée en ce que** le réflecteur (13), en amont duquel se trouve l'arrangement de transducteurs (14) et en aval duquel se trouve le flotteur (15), est subdivisé en des segments d'antenne (11), disposés horizontalement les uns contre les autres, séparés dans la direction verticale, et qui peuvent être montés individuellement sur la coque.
